# EUROPÄISCHE PATENTSCHRIFT

(11) **EP 0 919 761 B1**
(45) Veröffentlichungstag und Bekanntmachung des Hinweises auf die Patenterteilung: **10.04.2002**
(21) Anmeldenummer: 98121728.4
(22) Anmeldetag: 14.11.1998
(51) Int. Cl.: F16L 47/02, F16L 55/168, B29C 65/34

(54) **Schweissmuffe**
Welding socket
Manchon de soudage

(30) Priorität: 28.11.1997 DE 19752910
(43) Veröffentlichungstag der Anmeldung: 02.06.1999
(73) Patentinhaber: Friatec Aktiengesellschaft, 68229 Mannheim (DE)
(72) Erfinder: Scholl, Reinhold, 68309 Mannheim (DE)
(74) Vertreter: Schmitt, Meinrad, Dipl.-Ing.

(56) Entgegenhaltungen:
- DE-C- 19 519 341
- US-A- 4 670 207
- US-A- 4 684 417

## Beschreibung

Die Erfindung bezieht sich auf eine Schweißmuffe aus schmelzbarem Kunststoff gemäß den im Oberbegriff des Patentanspruchs 1 angegebenen Merkmalen.

Eine derartige Schweißmuffe ist aus der US-A-4 684 417 sowie der US-A-4 906 313 bekannt und enthält im Bereich ihrer Innenfläche eine Heizwendel oder Heizwicklung aus elektrisch leitendem Draht. Die vorbekannte Schweißmuffe ist als Doppelmuffe ausgebildet, in welcher von beiden Seiten die Rohrenden der miteinander zu verbindenden Kunststoffrohre einzuführen sind. Nach dem Einführen der Rohrenden in die Schweißmuffe wird die Heizwicklung mit Strom derart beaufschlagt, daß der Kunststoff im Inneren der Schweißmuffe ebenso wie der Kunststoff der Außenfläche des Rohrendes zur Herstellung einer Schweißverbindung erwärmt werden. Derartige Schweißmuffen können nicht nur als Doppelmuffen ausgebildet sein, sondern auch Bestandteil von Armaturen oder vergleichbaren Baukomponenten in Rohrleitungen sein. Kunststoffrohre weisen in der Praxis oftmals nicht die ideale, axial langgestreckte Form auf, zumal wenn sie auf Rollen bereitgestellt werden und dementsprechend gebogen sind. Bei der Verbindung von Rohren aus Rollenware mittels Schweißmuffen durch das Heizwendelschweißen besteht das Problem, daß aufgrund der großen Eigenspannungen infolge der Rohrkrümmung eine sichere Verschweißung nur durch zusätzliche Hilfsmittel, genannt seien hier Richt-, Spann- und Haltevorrichtungen, gewährleistet werden kann. Hinzu kommt, daß Eigenspannungen bzw. die Steifigkeit der Rohre mit sinkender Umgebungstemperatur größer werden. Das Handling bzw. die Verarbeitung im Rohrgraben gestaltet sich unter derartigen Bedingungen besonders schwierig. Bei den vorbekannten Schweißmuffen gemäß US-A-4 684 417 oder 4 906 313 ist die Länge des jeweiligen zum Verschweißen eines Rohrendes vorgesehenen Muffenteils näherungsweise gleich groß wie der Innendurchmesser bzw. die Nennweite.

Zur Vermeidung von zusätzlichen Haltevorrichtungen ist aus der japanischen Anmeldung gemäß JP 07 145 899 A eine Schweißmuffe bekannt, welche im Inneren radial gerichtete und axial teilweise konisch verlaufende Zentrierrippen aufweist. In der Mitte der Längserstreckung enthält diese als Doppelmuffe ausgebildete Schweißmuffe einen ringförmigen Anschlag für die einzuführenden Rohrenden. Die Zentrierrippen, welche ein Festklemmen des Rohrendes ermöglichen, sind zwischen dem ringförmigen Anschlag und der axial beabstandet angeordne111ten jeweiligen Heizwicklung angeordnet. Bei derart innenliegenden Zentrierrippen besteht die Gefahr, daß die Rohrenden nicht vollständig bis zum Anschlag eingeführt werden, weil bereits die Führungsrippen eine Begrenzung der Einschubbewegung bewirken können. Die Fertigungstoleranzen für die Schweißmuffe einschließlich der Zentrierrippen müssen eng vorgegeben werden, zumal die Fertigung der Rohre unter praktischen und wirtschaftlichen Erwägungen mit vergleichsweise großen Toleranzen erfolgt. Ist das Rohrende nicht vollständig eingeführt, so besteht die Gefahr einer fehlerhaften Schweißverbindung.

Des weiteren ist aus der DE-C-195 19 341 eine Reparaturschelle mit einem Oberteil und einem Unterteil bekannt, welche als Halbschalen ausgebildet sind. Das Oberteil und das Unterteil werden zur Reparatur im Bereich einer Schadstelle auf das Rohr aufgesetzt und im Bereich ihrer axialen Längskanten, insbesondere mittels Schrauben, miteinander verbunden. Das Oberteil und das Unterteil enthalten in den jeweiligen axialen Endbereichen je eine elektrische Heizwicklung zum Verschweißen mit dem Rohr, wobei in den Innenflächen ferner zwei axial beabstandete Dichtringe vorgesehen sind. Auch im Bereich der axialen Längskanten sind Heizwicklungen zur dichten Verbindung des Oberteils und des Unterteils der Reparaturschelle vorgesehen. In einer anderen Ausführung ist die Reparaturschelle flexibel ausgebildet und mit zwei in ihrem Abstand veränderbaren Längskanten versehen, um in radialer Richtung auf die Außenfläche des Rohres aufgesetzt werden zu können. Nach dem Aufsetzen werden die Längskanten mittels einer Heizwicklung verschweißt. Es ist ein zusätzlicher Aufwand bei der Herstellung und Montage aufgrund der wenigstens einen Heizwicklung im Bereich der Längskanten erforderlich. Es ist kein über den Umfang geschlossener zylindrischer Muffenkörper vorhanden, und die vorbekannte Reparaturschelle kann nicht ohne weiteres zur Herstellung einer längskraftschlüssigen Verbindung zweier Rohrenden oder eines Rohrendes mit einer Armatur oder dergleichen zum Einsatz gelangen.

Aus der US-A-4 670 207 ist eine Doppelmuffe für eine Klebeverbindung zweier Rohrenden bekannt. Damit im Hinblick auf Unterschiede des Rohraußendurchmessers und des Muffeninnendurchmessers, insbesondere aufgrund von Fertigungstoleranzen, eine sichere Verklebung erreichbar ist, ist die Innenfläche der Muffe konisch ausgebildet, wobei insbesondere durch Erwärmen die Außenfläche des Rohrendes verformbar ist. Die Einschubtiefe entspricht im wesentlichen dem Außendurchmesser des Rohrendes. Zur Herstellung der Klebeverbindung muß das Rohrende axial in die Muffe eingepresst werden, damit die Außenfläche des Rohrendes ordnungsgemäß mit der konischen Innenfläche der Muffe in Eingriff gelangen kann.

Ferner ist aus der DE-A-44 22 372 ein Verfahren zum Schweißen von Kunststoffrohren und eine Muffe zur Durchführung des Verfahrens bekannt, wobei die Muffe wiederum als Doppelmuffe ausgebildet ist und eine sich praktisch über die gesamte Muffenlänge erstreckende Heizwendel enthält. Im mittleren Muffenbereich, in welchem die beiden zu verbindenden Rohrenden aneinanderstoßen, liegen die Windungen der Heizwicklung näher beieinander als in den jeweils zu den Muffenenden anschließenden Bereichen der Heizwendel, um die aneinanderstoßenden Rohrenden durch eine Stumpfschweißung direkt miteinander zu verbinden. Mittels einer besonderen Haltevorrichtung werden die Rohrenden fixiert. Bei Rohren mit geringen Durchmessem kann die Doppelmuffe im Bereich der beiden Muffenenden zusätzliche Ansätze zum Halten der Rohre aufweisen, um auf die Haltevorrichtung verzichten zu können. Die axiale Länge des Ansatzes ist wesentlich kleiner als die axiale Länge der Heizwendel bzw. der Schweißzone.

Aus dem deutschen Gebrauchsmuster DE 296 19 861 U1 ist eine Kunststoff-Schweißmuffe bekannt, welche gleichfalls als Doppelmuffe zum Verbinden von zwei Rohrenden ausgebildet ist und welche an den beiden Enden jeweils eine besondere Spannvorrichtung aufweist. Im Bereich der Spannvorrichtung enthält der Kunststoff-Muffenkörper axiale Schlitze, damit mittels der Spannvorrichtung radiale Kräfte zum Festhalten des Rohrendes ausübbar sind. Die Betätigung der Spannvorrichtungen erfordert einen zusätzlichen Montageaufwand und es besteht das Risiko, daß bei unzureichendem Festspannen die Muffe nicht ordnungsgemäß bezüglich des Rohrendes gesichert ist.

Darüber hinaus lehrt die japanische Anmeldung gemäß JP 07 145 897 A eine Schweißmuffe, welche an den beiden Muffenenden radial nach innen ragende Vorsprünge aufweist, welche an der Rohraußenfläche anliegen. Im Vergleich zur Wanddicke des Muffenkörpers sind die genannten Vorsprünge recht dünn ausgebildet und weisen somit eine geringe radiale Steifigkeit auf. Mittels der Vorsprünge soll eine axiale Halterung erreicht werden, wobei aber radiale Ausgleichsbewegungen möglich sind und eine Zentrierung des Rohrendes bezüglich der Muffe nicht erreicht werden kann.

Der Erfindung liegt daher die Aufgabe zugrunde, die Schweißmuffe der genannten Art dahingehend weiterzubilden, daß Rohrleitungen, insbesondere aus Rollenware, problemlos und funktionssicher verschweißt werden können. Eigenspannungen infolge der Rohrkrümmung oder eines Axialversatzes zwischen den Rohrenden und der Schweißmuffe sollen keine nachteiligen Auswirkungen auf die Schweißgüte haben.

Die Lösung dieser Aufgabe erfolgt gemäß den Merkmalen des Patentanspruchs 1.

Die erfindungsgemäße Schweißmuffe zeichnet sich durch eine funktionsgerechte Konstruktion aus und enthält eine vordere Führungszone zwischen der Schweißzone mit der Heizwendel und dem freien Muffenende. Die vordere Zone und/oder die zum Muffengrund hin an die Schweißzone axial anschließende Innenzone sind erfindungsgemäß derart lang ausgeführt, daß das eingeschobene Rohrende auch während des Schweißvorganges sicher geführt und abgestützt ist. Die Summe der axialen Längen der vorderen Zone und der genannten Innenzone ist zumindest gleich groß, bevorzugt um einen vorgegebenen Faktor größer, als die Länge der Schweißzone bzw. der Heizwendel. Ferner ist die Einschubtiefe des Rohrendes mindestens um den Faktor 1,4, bevorzugt den Faktor 1,5 und insbesondere um den Faktor 1,7, größer als der Innendurchmesser des Muffenkörpers. Im Rahmen der Erfindung ist ferner die axiale Länge jeweils der vorderen Zone sowie der Innenzone zumindest näherungsweise gleich groß wie die axiale Länge der Schweißzone. Hierdurch wird selbst bei gekrümmten Rohrenden vermieden, daß während des Schweißens Relativbewegungen des Rohrendes bezüglich der Schweißmuffe auftreten. Derartige Bewegungen können zu unerwünschten Belastungen oder gar Kurzschlüssen der Heizwendel führen, wird auch diese während des Schweißens in dem erhitzten plastischen Kunststoff der Schweißmuffe Kräften einwirken, die zu Lage- oder Formveränderungen der Heizwendel führen können. Die vordere Zone oder Klemm- bzw. Führungszone beinhaltet den Bereich der kalten Zone und ist wesentlich länger als die für die Verschweißung erforderliche kalte Zone. Durch die nach innen versetzte Heizwendel bzw. Schweißzone ist im vorderen Muffenbereich eine Klemmzone ebenso vorhanden wie in der mittleren Innenzone. Bei Ausbildung als Doppelmuffe schließen in der Mitte zwei derartige Innenzonen aneinander an, welche gemeinsam zwischen den beiden Heizwendeln angeordnet sind, wobei in der Mitte grundsätzlich ein Anschlag zur Begrenzung der Einschubbewegung der Rohrenden vorgesehen sein kann. Alternativ ist die Schweißmuffe als Überschiebmuffe derart ausgebildet, daß in der Mitte oder im Inneren kein Anschlag für die einzuführenden Rohrenden vorhanden ist. Die vordere Klemmzone ebenso wie die Innenzone sind derart verlängert, daß sie auf das eingeschobene Rohrende eine Richtfunktion und/oder Klemmung ergeben. Es wird eine Aufnahme bzw. Abstützung des Rohraußenmantels auch bei gekrümmten Rohrenden und der daraus hervorgerufenen Spannungen bzw. Reaktionskräfte auf die Muffeninnenseite ermöglicht.

Wesentlich ist, daß durch die vergleichsweise lange Ausbildung sowohl der Klemmzone als auch der an die Heizwendel im Inneren anschließenden Innenzone die Schweißzone spannungsfrei gehalten wird und während des Schmelzens bzw. der Plastifizierungsphase des Kunststoffes eine Verlagerung der Heizwendel vermieden wird. Es wurde erkannt, daß gekrümmte Rohrenden in herkömmlichen kurzen Schweißmuffen örtliche radiale Spannungen auf die Heizwendel in nachteiliger Weise ausüben, während diametral ein unzulässig großer Luftspalt oder eine zu geringe Anpreßkraft zwischen der Muffeninnenfläche und der Rohraußenfläche gegeben sind, mit der Folge von Kurzschlüssen benachbarter Windungen und somit einer fehlerhaften oder unvollständigen Verschweißung.

Weiterbildungen und besondere Ausgestaltungen der Erfindung sind in den Unteransprüchen enthalten.

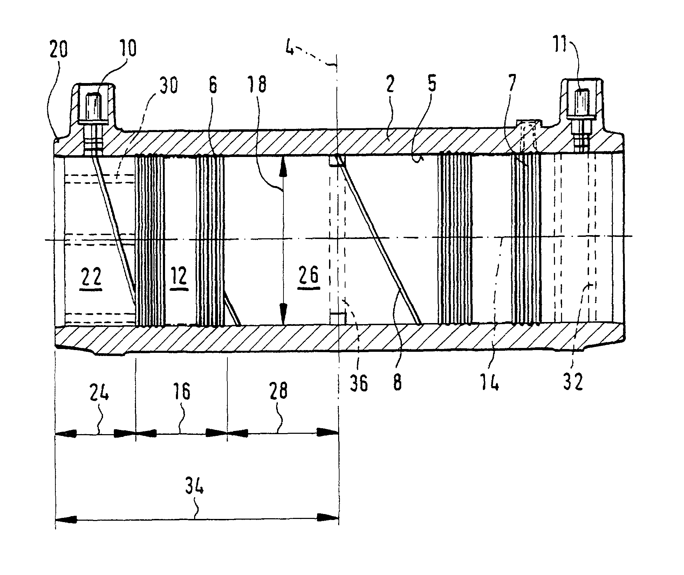

Die in der Zeichnung in einem axialen Schnitt dargestellte Schweißmuffe ist als Doppelmuffe ausgebildet und enthält einen Muffenkörper 2 aus schweiß- oder schmelzbarem bzw. thermoplastischem Kunststoff. Die Schweißmuffe ist ferner zweckmäßig als Überschiebmuffe, im wesentlichen symmetrisch bezüglich einer Mittelebene 4 ausgebildet und enthält im Bereich ihrer Innenfläche 5 zu beiden Seiten der Mittelebene 4 jeweils eine Heizwendel 6, 7. Die Innenfläche 5 der Muffe ist erfindungsgemäß durchgehend, im wesentlichen zylindrisch, ausgebildet. Diese beiden Heizwendeln 6, 7 der gemäß Zeichnung linken bzw. rechten Muffenteile bestehen aus dem gleichen durchgehenden Heizdraht 8, dessen Enden in bekannter Weise auf Kontaktelemente 10, 11 geführt sind. Mittels eines Kabels und korrespondierender Stecker ist die elektrische Verbindung zu einem Schweißgerät herstellbar, um zum Schweißen den Heizdraht bzw. die Heizwendeln 6, 7 in der erforderlichen Weise mit Strom zu beaufschlagen. Die nachfolgenden Erläuterungen zu dem gemäß Zeichnung linken Teil der Schweißmuffe gelten in entsprechender Weise für den bezüglich der Mittelebene 4 rechten Teil der Schweißmuffe.

Wie ersichtlich, ist der Heizdraht 8 zur Bildung der Schweißzone 12 zur Heizwendel 6 gewickelt, wobei diese Schweißzone 12 in Richtung der Längsachse 14 eine Länge 16 aufweist. Der Vollständigkeit halber sei angemerkt, daß unter anderem in Abhängigkeit vom Nenndurchmesser bzw. Innendurchmesser 18 der Schweißmuffe, der Widerstandswert des Schweißdrahtes, die Abstände der einzelnen Windungen der Heizwendel sowie die Länge 16 der Heizwendel den Erfordernissen entsprechend vorgegeben werden. In Richtung zum vorderen, freien Muffenende 20 schließt an die Heizwendel 6 eine vordere Zone 22 mit einer axialen Länge 24 an. Die Länge 24 ist wesentlich größer vorgegeben als bei der üblichen Ausbildung einer kalten Zone. Die vordere Zone 22 ist erfindungsgemäß als Klemm- bzw. Führungszone ausgebildet und enthält den Bereich der kalten Zone. Bei der erfindungsgemäßen Schweißmuffe ist auch im Bereich der vorderen Zone der Muffenkörper über den Umfang geschlossen ausgebildet, also ohne radiale Schlitze, wobei ferner auch keine wesentliche und/oder die Steifigkeit reduzierende Verringerung der Wanddicke vorgesehen ist. Die Länge 24 der vorderen Zone oder Klemmzone 22 ist im wesentlichen gleich groß wie die axiale Länge 16 der Schweißzone 12 bzw. der Heizwendel 6.

Ferner ist im Inneren der Schweißmuffe zwischen der Heizwendel 6 und der Mittelebene 4 eine vergleichsweise lange Innenzone 26 mit einer axialen Länge 28 vorgesehen. Die axiale Länge 28 der Innenzone 26 ist zumindet gleich groß, bevorzugt um einen vorgegebenen Faktor größer als die Länge 16 der Schweißzone 12. Die Schweißzone liegt erfindungsgemäß axial zwischen der vorderen Zone bzw. Klemmzone 22 und der Innenzone 26. Der Faktor, welcher durch das Verhältnis der axialen Länge 28 der Innenzone 26 zur axialen Länge 16 der Schweißzone 12 definiert ist, beträgt wenigstens 1,1 und ist zweckmäßig größer als 1,2. Vorteilhaft liegt der genannte Faktor im Bereich zwischen 1,1 bis 1,4.

Die Summe aus der Länge 24 der vorderen Zone und der Länge 28 der Innenzone 26 ist erfindungsgemäß wenigstens gleich groß wie die axiale Länge 16 der Schweißzone 12. Die Summe der genannten Längen 24 und 28 ist um einen vorgegebenen Faktor bevorzugt größer als die Länge 16 der Schweißzone. In zweckmäßiger Weise ist dieser Faktor wenigstens 1,4, bevorzugt wenigstens 1,6 und insbesondere größer als 1,8.

Ferner ist im Rahmen der Erfindung die Summe aus der Länge 24 der vorderen Zone und der Länge 28 der Innenzone näherungsweise gleich groß oder größer als der Innendurchmesser 18 der Muffe. In zweckmäßiger Weise ist diese Summe um einen Faktor größer als der Innendurchmesser 18, wobei dieser Faktor wenigstens 1,05, bevorzugt wenigstens 1,1 und insbesondere 1,14 größer ist als der Innendurchmesser 18.

Das Verhältnis, welches aus der axialen Länge 24 der vorderen Zone 22 durch den Innendurchmesser 18 des Muffenkörpers 2 definiert ist, ist größer als 0,35 und liegt vorzugsweise im Bereich zwischen 0,35 bis 0,55. Die Vorgabe des genannten Verhältnisses im Bereich zwischen 0,4 und 0,5 hat sich als zweckmäßig erwiesen.

Schließlich ist im Rahmen der Erfindung das Verhältnis, welches aus der axialen Länge 28 der Innenzone 26 und dem Innendurchmesser 18 gebildet ist, größer als 0,4, zweckmäßig größer als 0,5 vorgegeben. Dieses Verhältnis liegt zwischen 0,4 bis 0,9 und vorzugsweise in der Größenordnung von 0,6.

Durch die vergleichsweise lange vordere Zone oder Klemmzone 22 und insbesondere in Kombination mit der lang vorgegebenen Innenzone 26 wird während der Verschweißung eine Klemmung oder Richtfunktion des in den Muffenkörper 2 eingeschobenen Rohrendes erreicht. Es wird die Aufnahme bzw. Abstützung des eingeschobenen gekrümmten Rohrendes derart gewährleistet, daß die Schweißzone spannungsfrei bleibt und während des Erwärmens bzw. der Plastifizierungsphase des Kunststoffs eine unerwünschte Verlagerung der Heizwendel vermieden wird.

Es ist von entscheidender Bedeutung, daß die Summe aus der Länge 24 der vorderen Zone 22 und der Länge 28 der Innenzone 26 zumindest näherungsweise gleich groß ist wie der Innendurchmesser 18. Das Verhältnis der Summe aus den beiden Längen 24 und 28 zum Innendurchmesser 18 ist zweckmäßig größer als 0,8, und liegt vorzugsweise im Bereich zwischen 0,8 bis 1,5, zweckmäßig zwischen 1,0 bis 1,3. Es sei hier festgehalten, daß diese Werte insbesondere bei einer Schweißmuffe mit einer Nennweite bzw. einem Innendurchmesser 18 von 50 mm gelten. Wie nachfolgend noch zu erläutern sein wird, sind in zweckmäßiger Weise bei Muffen mit anderen Innendurchmessern Korrekturfaktoren für die Werte vorgesehen, welche insbesondere für die in der Zeichnung dargestellte und in der Beschreibung erläuterte besondere Ausführungsform der Schweißmuffe der Nennweite 50 gelten.

In der vorderen Zone 22 sind mit gestrichelten Linien 30 axiale Führungselemente angedeutet, um eine verbesserte koaxiale Führung und Rundung des Rohrendes zu erhalten. Aus den gleichen Gründen könnten in der vorderen Zone 22 auch radial zum Muffenumfang verlaufende Elemente 32 vorgesehen sein, wie es im rechten Teil der Zeichnung mit gestrichelten Linien angedeutet ist. Die Elemente 32 der vorderen Zone sind in einer besonderen Ausgestaltung als Halteelemente zur axialen Fixierung des eingeschobenen Rohrendes ausgebildet. Die Elemente 32 sind bevorzugt als Zähne mit Spitzen derart ausgebildet, daß das Rohrende problemlos in die Muffe eingeschoben werden kann, andererseits aber gegen ein unerwünschtes Herauslösen gesichert ist. Die Halteelemente 32 und/oder die Zahnspitzen sind daher erfindungsgemäß nach innen in Richtung der Innenzone 26 abgewinkelt angeordnet.

Die bisher anhand der Zeichnung erläuterte Muffe bzw. Doppelmuffe ist als Überschiebmuffe ausgebildet, welche ungehindert über die Rohrenden geschoben werden kann. Alternativ kann die Muffe, bevorzugt im Bereich der Mittelebene 4, einen Anschlag 36 aufweisen, an welchem das oder die beiden Rohrenden nach dem Einführen in die Muffe zur Anlage gelangen. Der Anschlag 36 ist bevorzugt als ein umlaufender geschlossener Vorsprung ausgebildet, welcher von der Innenfläche 5 radial zur Längsachse 14 gerichtet ist. Bedarfsweise kann der Anschlag 36 als eine Anzahl über den Umfang verteilter Noppen oder einzelne Vorsprünge ausgebildet sein.

Bei der erfindungsgemäßen Schweißmuffe ist die Einschubtiefe 34 wesentlich größer als der Innendurchmesser 18. Die Einschubtiefe 34 ist erfindungsgemäß um einen vorgebbaren Faktor größer als der Innendurchmesser 18, wobei dieser Faktor größer als 1,4 ist. Zweckmäßig liegt dieser Faktor zwischen 1,4 bis 2, insbesondere zwischen 1,5 bis 1,9.

Bei der erfindungsgemäßen Schweißmuffe kommt es vor allem darauf an, daß außerhalb der Schweißzone 12 im Inneren des Muffenkörpers hinreichend lange Stütz- und Führungszonen für das Rohrende vorhanden sind, um beim Schweißen die Schweißzone 12 möglichst kräfte- und spannungsfrei zu halten. Es wurde erkannt, daß die Gesamtlänge der vorderen Zone 22 und der Innenzone 26 im Vergleich zur Länge der Schweißzone 12 vorgegeben werden muß, um eine funktionsgerechte koaxiale Ausrichtung und Führung zumindest näherungsweise auch dann zu erhalten, wenn die Rohrenden, insbesondere bei Rollenware, eine von der idealen Geometrie abweichende Form aufweisen. Die Summe der Längen 24 und 28 der vorderen Zone 22 sowie der Innenzone 26 ist in zweckmäßiger Weise wesentlich größer als die Länge 16 der Schweißzone 12. Die Summe aus den Längen 24 und 28 ist um einen vorgebbaren Faktor größer als die Länge 16 der Schweißzone, wobei dieser Faktor bevorzugt größer als 1,5 ist. Vorteilhaft liegt dieser Faktor zwischen 1,5 bis 2,6, insbesondere zwischen 1,8 und 2,3.

Die vorstehend erläuterten Bemessungsangaben betreffen insbesondere eine Schweißmuffe für eine Nennweite bzw. einen Innendurchmesser 18 von 50 mm. Bei dieser besonderen Ausführungsform ist die Länge 24 der vorderen Zone 22 im wesentlichen 23 mm lang. Ferner beträgt die Länge 16 der Schweißzone 12 zumindest näherungsweise 26 mm. Schließlich ist die axiale Länge 28 der Innenzone 26 im wesentlichen 33 mm groß.

Darüber hinaus wurde erkannt, daß Schweißmuffen für größere Nennweiten bzw. für größere Innendurchmesser vor allem die auf den Innendurchmesser um einen Korrekturfaktor bezogenen Längenmaße zweckmäßig reduziert werden können bzw. kleineren Innendurchmessern erhöht werden können. Die vorstehend erläuterten Längenangaben bzw. auf den Durchmesser bezogenen Längenangaben, gelten für Schweißmuffen mit einem Innendurchmesser 18 von 50 mm. Für eine Schweißmuffe mit einem Innendurchmesser von 110 mm ist ein Korrekturfaktor von 0,67 zweckmäßig. Für einen Innendurchmesser 18 von 200 mm ist ein Korrekturfaktor von 0,5 zweckmäßig. Ferner ist für einen Innendurchmesser von 315 mm ein Korrekturfaktor von 0,4 vorzusehen, während für einen Innendurchmesser 18 von 400 mm ein Korrekturfaktor von 0,36 sich als zweckmäßig erwiesen hat. Hingegen ist für Schweißmuffen mit einem Innendurchmesser 18 kleiner als 50 mm ein Korrekturfaktor größer als 1 vorzugeben. So beträgt für einen Innendurchmesser von 40 mm dieser Faktor 1,1, während für einen Innendurchmesser 18 von 32 mm dieser Korrekturfaktor in zweckmäßiger Weise 1,2 beträgt. Mit diesen erfindungsgemäß vorgesehenen Korrekturfaktoren werden in Abhängigkeit vom Innendurchmesser die anhand des Ausführungsbeispiels oben erläuterten Dimensionierungsangaben verändert.

### Bezugszeichen

- 2: Muffenkörper
- 4: Mittelebene
- 5: Innenfläche von 2
- 6, 7: Heizwendel
- 8: Heizdraht
- 10, 11: Kontaktelement
- 12: Schweißzone
- 14: Längsachse
- 16: Länge von 12
- 18: Innendurchmesser
- 20: freies Muffenende
- 22: vordere Zone
- 24: Länge von 22
- 26: Innenzone
- 28: axiale Länge von 26
- 30: Führungselement
- 32: Halteelement
- 34: Einschubtiefe
- 36: Anschlag

## Patentansprüche

1. Schweißmuffe mit einem durchgehend zylindrischen Muffenkörper (2) aus schmelzbarem Kunststoff und mit einer in dessen Innenfläche (5) angeordneten Heizwendel (6, 7). welche vom freien Muffenende (20) über eine vordere Zone (22) beabstandet angeordnet ist und mit elektrischem Strom beaufschlagbar ist, wobei mit einem in den Muffenkörper (2) einschiebbaren Rohr aus schmelzbarem Kunststoff eine Verbindung herstellbar ist, und femer mit einer an die Heizwendel (6, 7) anschließenden eine axiale Länge (28) aufweisende Innenzone (26), an welcher das eingeschobene Rohr zur Anlage kommt, wobei die Summe der Länge (24) der vorderen Zone (22) und die Länge (28) der Innenzone (26) gleich oder größer als die Länge (16) der Heizwendel (6, 7) ist,
**dadurch gekennzeichnet, daß** das Verhältnis, welches aus der axialen Länge (28) der Innenzone (26) bezogen auf den Innendurchmesser (18) gebildet ist, im Bereich zwischen 0,4 bis 0,9 liegt, und daß die Einschubtiefe (34) mindestens um einen Faktor 1, 4 größer ist als der Inmendurchmesser (18) des Muffenkörpers (2).

2. Schweißmuffe nach Anspruch 1, **dadurch gekennzeichnet, daß** die axiale Länge (28) der Innenzone (26) um einen vorgegebenen Faktor größer ist als die axiale Länge (16) der Schweißzone (12), wobei dieser Faktor insbesondere im Bereich zwischen 1,1 bis 1,4 liegt, vorzugsweise zwischen 1,2 und 1,3.

3. Schweißmuffe nach Anspruch 1 oder 2, **dadurch gekennzeichnet, daß** die Einschubtiefe (34) mindestens um den Faktor 1,5, bevorzugt mindestens um den Faktor 1,7 größer ist als der Innendurchmesser (18).

4. Schweißmuffe, insbesondere nach einem der Ansprüche 1 bis 3, **dadurch gekennzeichnet, daß** der Quotient, welcher aus der Summe der beiden Längen (24 und 28) der vorderen Zone (22) sowie der Innenzone (26) dividiert durch den Innendurchmesser (18) gebildet ist, größer als 0,8 ist, inbesondere im Bereich zwischen 0,8 bis 1,5 und vorzugsweise im Bereich zwischen 1,0 bis 1,3 liegt.

5. Schweißmuffe nach einem der Ansprüche 1 bis 4, **dadurch gekennzeichnet, daß** die vordere Zone (22) eine axiale Länge (24) aufweist, welche zumindest näherungsweise gleich lang ist wie die axiale Länge (16) der Schweißzone (12) und/oder daß in der vergrößerten vorderen Zone (22) die kalte Zone enthalten ist.

6. Schweißmuffe nach einem der Ansprüche 1 bis 5, **dadurch gekennzeichnet, daß** das Verhältnis aus der axialen Länge (24) der vorderen Zone (22) zum Innendurchmesser (18) des Muffenkörpers (2) größer als 0,3 ist, insbesondere im Bereich zwischen 0,3 bis 0,5 liegt und vorzugsweise im Bereich zwischen 0,35 und 0,45 liegt.

7. Schweißmuffe, insbesondere nach einem der Ansprüche 1 bis 6, **dadurch gekennzeichnet, daß** die Summe aus der Länge (24) der vorderen Zone (22) und der axialen Länge (28) der Innenzone (26) wesentlich größer ist als die Länge (16) der Schweißzone (12), und zwar vorzugsweise um den Faktor 1,5 größer ist, insbesondere im Bereich zwischen 1,5 bis 2,6 und vorzugsweise im Bereich zwischen 1,8 bis 2,3.

8. Schweißmuffe nach einem der Ansprüche 1 bis 7, **dadurch gekennzeichnet, daß** das Verhältnis, welches aus der axialen Länge (28) der Innenzone (26) bezogen auf den Innendurchmesser (18) gebildet ist, zwischen 0,5 und 0,8 groß ist.

9. Schweißmuffe nach einem der Ansprüche 1 bis 8, **dadurch gekennzeichnet, daß** in der vorderen Zone (22) axiale Führungselemente (30) oder radial zum Muffenumfang verlaufende Elemente (32) zur Führung und/oder Halterung des Rohrendes vorgesehen sind.

10. Schweißmuffe nach einem der Ansprüche 1 bis 9, **dadurch gekennzeichnet, daß** die Gesamtlänge der vorderen Zone (22) und der Schweißzone (12) und der Innenzone (26) um einen vorgegebenen Faktor größer ist als der Innendurchmesser (18), wobei dieser Faktor wenigstens 1,3, vorzugsweise wenigstens 1,4, beträgt und/oder daß dieser Faktor im Bereich zwischen 1,3 bis 1,6 liegt.

11. Schweißmuffe nach einem der Ansprüche 1 bis 10, **dadurch gekennzeichnet, daß** die Einschubtiefe (34) um den Faktor zwischen 1,4 bis 2 und in zweckmäßiger Weise zwischen 1,5 bis 1,9 größer ist als der Innendurchmesser (18).

12. Schweißmuffe nach einem der Ansprüche 1 bis 11, **dadurch gekennzeichnet, daß** die Dimensionsangaben der vorhergehenden Ansprüche für einen Innendurchmesser (18) von 50 mm gelten und daß für Schweißmuffen mit größeren Werten des Innendurchmessers (18) ein Korrekturfaktor kleiner 1 zum Ansatz gebracht wird, während für Schweißmuffen mit kleinerem Innendurchmesser ein Korrekturfaktor größer 1 zur Anwendung gelangt.

13. Schweißmuffe nach Anspruch 12, **dadurch gekennzeichnet, daß** für einen Innendurchmesser (18) von 32 mm der Korrekturfaktor 1,2 beträgt oder daß für einen Innendurchmesser (18) von 40 mm der Korrekturfaktor 1,1 beträgt oder daß für einen Innendurchmesser (18) von 110 mm der Korrekturfaktor 0,67 beträgt oder daß für einen Innendurchmesser (18) von 200 mm der Korrekturfaktor 0,5 beträgt oder daß für einen Innendurchmesser (18) von 315 mm der Korrekturfaktor 0,4 beträgt oder daß für einen Innendurchmesser (18) von 400 mm der Korrekturfaktor 0,36 beträgt oder daß für Schweißmuffen, deren Innendurchmesser zwischen den vorstehend genannten Werten liegen, entsprechende Zwischenwerte der Korrekturfaktoren vorgegeben sind.

## Claims

1. Welding sleeve with a continuous cylindrical sleeve element (2) made of fusible plastics material and with a heating spiral (6, 7) arranged in the interior face (5) thereof, which spiral is arranged at a distance from the free sleeve end (20) over a leading zone (22) and can be charged with electric current, wherein a connection can be produced by a pipe made of fusible plastics material which can be inserted into the sleeve element (2), and furthermore with an interior zone (26) with an axial length (28) adjoining the heating spiral (6, 7), on which zone (26) the inserted pipe comes to rest, the sum of the length (24) of the leading zone (22) and the length (28) of the interior zone (26) being equal to or greater than the length (16) of the heating spiral (6, 7), **characterised in that** the ratio which is formed from the axial length (28) of the interior zone (26), based on the internal diameter (18), is in the range between 0.4 and 0.9, and **in that** the insertion depth (34) is greater by at least a factor of 1.4 than the internal diameter (18) of the sleeve element (2).

2. Welding sleeve according to claim 1, **characterised in that** the axial length (28) of the interior zone (26) is greater by a predetermined factor than the axial length (16) of the welding zone (12), this factor in particular being in the range between 1.1 and 1.4, preferably between 1.2 and 1.3.

3. Welding sleeve according to claim 1 or 2, **characterised in that** the insertion depth (34) is greater by a factor of at least 1.5, preferably by a factor of at least 1.7 than the internal diameter (18).

4. Welding sleeve, in particular according to any of claims 1 to 3, **characterised in that** the quotient which is formed from the sum of the two lengths (24 and 28) of the leading zone (22) and the interior zone (26) divided by the internal diameter (18) is greater than 0.8, in particular in the range between 0.8 and 1.5 and preferably in the range between 1.0 and 1.3.

5. Welding sleeve according to any of claims 1 to 4, **characterised in that** the leading zone (22) has an axial length (24) which is at least approximately as long as the axial length (16) of the welding zone (12) and/or that the cold zone is contained in the enlarged leading zone (22).

6. Welding sleeve according to any of claims 1 to 5, **characterised in that** the ratio of the axial length (24) of the leading zone (22) to the internal diameter (18) of the sleeve element (2) is greater than 0.3, in particular in the range between 0.3 and 0.5 and preferably in the range between 0.35 and 0.45.

7. Welding sleeve, in particular according to any of claims 1 to 6, **characterised in that** the sum of the length (24) of the leading zone (22) and the axial length (28) of the interior zone (26) is substantially greater than the length (16) of the welding zone (12) and, more precisely, is preferably greater by the factor 1.5, in particular in the range between 1.5 and 2.6 and preferably in the range between 1.8 and 2.3.

8. Welding sleeve according to any of claims 1 to 7, **characterised in that** the ratio which is formed from the axial length (28) of the interior zone (26), based on the internal diameter (18), is between 0.5 and 0.8.

9. Welding sleeve according to any of claims 1 to 8, **characterised in that** in the leading zone (22) axial guide elements (30) or elements (32) extending radially with respect to the periphery of the sleeve for guidance and/or holding of the end of the pipe are provided.

10. Welding sleeve according to any of claims 1 to 9, **characterised in that** the overall length of the leading zone (22) and the welding zone (12) and the interior zone (26) is greater by a predetermined factor than the internal diameter (18), this factor being at least 1.3, preferably at least 1.4 and/or **in that** this factor is in the range between 1.3 and 1.6.

11. Welding sleeve according to any of claims 1 to 10, **characterised in that** the insertion depth (34) is greater by a factor between 1.4 and 2 and expediently between 1.5 and 1.9 than the internal diameter (18).

12. Welding sleeve according to any of claims 1 to 11, **characterised in that** the dimensions of the preceding claims apply to an internal diameter (18) of 50 mm and **in that** a correction factor smaller than 1 is used for welding sleeves with greater internal diameter (18) factors while a correction factor greater than 1 is used for welding sleeves with smaller internal diameter.

13. Welding sleeve according to claim 12, **characterised in that** for an internal diameter (18) of 32 mm the correction factor is 1.2 or **in that** for an internal diameter (18) of 40 mm the correction factor is 1.1 or **in that** for an internal diameter (18) of 110 mm the correction factor is 0.67 or **in that** for an internal diameter (18) of 200 mm the correction factor is 0.5 or **in that** for an internal diameter (18) of 315 mm the correction factor is 0.4 or **in that** for an internal diameter (18) of 400 mm the correction factor is 0.36 or **in that** for welding sleeves of which the internal diameter is between the above-mentioned factors corresponding intermediate factors of the correction factors are predetermined.

## Revendications

1. Manchon de soudage avec un corps de manchon (2) continûment cylindrique en matière synthétique fusible et avec un filament chauffant (6, 7) placé dans sa surface intérieure (5), lequel est placé espacé de l'extrémité libre du manchon (20) par une zone antérieure (22) et peut être alimenté par un courant électrique, une liaison avec un tuyau en matière synthétique fusible s'enfonçant dans le corps de manchon (2) pouvant être établie, et avec de plus une zone intérieure (26) faisant suite au filament chauffant (6, 7) et présentant une longueur axiale (28), contre laquelle vient se placer le tuyau enfoncé, la somme de la longueur (24) de la zone antérieure (22) et de la longueur (28) de la zone intérieure (26) étant égale ou supérieure à la longueur (16) du filament chauffant (6, 7), ***caractérisé en ce que*** le rapport formé par la longueur axiale (28) de la zone intérieure (26) divisée par le diamètre intérieur (18) est compris entre 0,4 et 0,9, et ***en ce que*** la profondeur d'enfoncement (34) est supérieure au moins d'un facteur 1,4 au diamètre intérieur (18) du corps de manchon (2).

2. Manchon de soudage selon la Revendication 1, ***caractérisé en ce que*** la longueur axiale (28) de la zone intérieure (26) est supérieure d'un facteur prédéterminé à la longueur axiale (16) de la zone de soudage (12), ce facteur étant compris en particulier entre 1,1 et 1,4, de préférence entre 1,2 et 1,3.

3. Manchon de soudage selon la Revendication 1 ou 2, ***caractérisé en ce que*** la profondeur d'enfoncement (34) est supérieure au moins d'un facteur 1,5, de préférence au moins d'un facteur 1,7, au diamètre intérieur (18).

4. Manchon de soudage selon l'une quelconque des Revendications 1 à 3, ***caractérisé en ce que*** le quotient formé par la somme des deux longueurs (24 et 28) de la zone antérieure (22) et de la zone intérieure (26), divisée par le diamètre intérieur (18), est supérieur à 0,8, en particulier compris entre 0,8 et 1,5 et de préférence entre 1,0 et 1,3.

5. Manchon de soudage selon l'une quelconque des Revendications 1 à 4, ***caractérisé en ce que*** la zone antérieure (22) présente une longueur axiale (24) qui est au moins approximativement aussi longue que la longueur axiale (16) de la zone de soudage (12) et/ou ***en ce que*** la zone froide est contenue dans la zone antérieure (22) agrandie.

6. Manchon de soudage selon l'une quelconque des Revendications 1 à 5, ***caractérisé en ce que*** le rapport entre la longueur axiale (24) de la zone antérieure (22) et le diamètre intérieur (18) du corps de manchon (2) est supérieur à 0,3, en particulier est compris entre 0,3 et 0,5 et de préférence entre 0,35 et 0,45.

7. Manchon de soudage, en particulier selon l'une quelconque des Revendications 1 à 6, ***caractérisé en ce que*** la somme de la longueur (24) de la zone antérieure (22) et de la longueur axiale (28) de la zone intérieure (26) est nettement supérieure à la longueur (16) de la zone de soudage (12), de préférence supérieure d'un facteur 1,5, en particulier d'un facteur compris entre 1,5 et 2,6, et de préférence entre 1,8 et 2,3.

8. Manchon de soudage selon l'une quelconque des Revendications 1 à 7, ***caractérisé en ce que*** le rapport formé par la longueur axiale (28) de la zone intérieure (26) divisée par le diamètre intérieur (18) est compris entre 0,5 et 0,8.

9. Manchon de soudage selon l'une quelconque des Revendications 1 à 8, ***caractérisé en ce que,*** dans la zone antérieure (22), des éléments de guidage axiaux (30) ou des éléments (32) s'étendant radialement à la circonférence du manchon sont prévus pour guider et/ou maintenir l'extrémité du tuyau.

10. Manchon de soudage selon l'une quelconque des Revendications 1 à 9, ***caractérisé en ce que*** la longueur totale de la zone antérieure (22) et de la zone de soudage (12) et de la zone intérieure (26) est supérieure d'un facteur prédéterminé au diamètre intérieur (18), ce facteur valant au moins 1,3, et de préférence au moins 1,4, et/ou ***en ce que*** facteur est compris entre 1,3 et 1,6.

11. Manchon de soudage selon l'une quelconque des Revendications 1 à 10, ***caractérisé en ce que*** la profondeur d'enfoncement (34) est supérieure d'un facteur d'entre 1,4 et 2 et de manière avantageuse d'entre 1,5 et 1,9 au diamètre intérieur (18).

12. Manchon de soudage selon l'une quelconque des Revendications 1 à 11, ***caractérisé en ce que*** les indications de dimensions des Revendications précédentes s'appliquent à un diamètre intérieur (18) de 50 mm et ***en ce que,*** pour des manchons de soudage ayant de plus grandes valeurs du diamètre intérieur (18), un facteur de correction inférieur à 1 est utilisé, tandis que pour les manchons de soudage à diamètre inférieur plus petit, on utilise un facteur de correction supérieur à 1.

13. Manchon de soudage selon la Revendication 12, ***caractérisé en ce que,*** pour un diamètre intérieur (18) de 32 mm, le facteur de correction vaut 1,2, ou ***en ce que,*** pour un diamètre intérieur (18) de 40 mm, le facteur de correction vaut 1,1, ou ***en ce que,*** pour un diamètre intérieur (18) de 110 mm, le facteur de correction vaut 0,67, ou ***en ce que,*** pour un diamètre intérieur (18) de 200 mm, le facteur de correction vaut 0,5, ou ***en ce que,*** pour un diamètre intérieur (18) de 315 mm, le facteur de correction vaut 0,4 ou ***en ce que,*** pour un diamètre intérieur (18) de 400 mm, le facteur de correction vaut 0,36, ou ***en ce que,*** pour des manchons de soudage dont le diamètre intérieur est compris entre les valeurs ci-dessus, des valeurs intermédiaires correspondantes des facteurs de correction sont imposées.
